# EUROPÄISCHE PATENTSCHRIFT

(11) **EP 3 722 077 B1**
(45) Veröffentlichungstag und Bekanntmachung des Hinweises auf die Patenterteilung: **05.11.2025**
(21) Anmeldenummer: 20178609.2
(22) Anmeldetag: 02.06.2017
(51) Int. Cl.: B22F 3/105, B22F 10/28, B22F 10/368, B22F 12/00, B22F 12/41, B22F 12/90, B29C 64/153, B29C 64/393, B29C 64/295, B29C 35/02, B29C 35/08, B33Y 30/00, B33Y 10/00, B33Y 50/02

(54) **VORRICHTUNG ZUR ADDITIVEN HERSTELLUNG DREIDIMENSIONALER OBJEKTE**
APPARATUS FOR ADDITIVELY MANUFACTURING OF THREE-DIMENSIONAL OBJECTS
DISPOSITIF DE FABRICATION ADDITIVE D'OBJETS TRIDIMENSIONNELS

(30) Priorität: 20.10.2016 DE 102016120044
(43) Veröffentlichungstag der Anmeldung: 14.10.2020
(62) Teilanmeldung aus: 17174401.4
(73) Patentinhaber: Concept Laser GmbH, 96215 Lichtenfels (DE)
(72) Erfinder: Herzog, Frank, 96215 Lichtenfels (DE); Bechmann, Florian, 96215 Lichtenfels (DE); Pontiller-Schymura, Peter, 95326 Kulmbach (DE)
(74) Vertreter: Hafner & Kohl PartmbB

(56) Entgegenhaltungen:
- WO-A1-2006/105827
- DE-A1- 102014 204 580
- US-A1- 2014 263 209
- US-A1- 2016 279 707

## Beschreibung

Die Erfindung betrifft eine Vorrichtung zur additiven Herstellung dreidimensionaler Objekte durch sukzessive schichtweise selektive Belichtung und damit einhergehende Verfestigung von Baumaterialschichten aus einem vermittels eines Energiestrahls verfestigbaren Baumaterial.

Entsprechende Vorrichtungen sind zur additiven Herstellung dreidimensionaler Objekte an und für sich bekannt. Vermittels entsprechenden Vorrichtungen werden dreidimensionale Objekte durch sukzessive schichtweise selektive Belichtung und damit einhergehende Verfestigung von in einer Bauebene ausgebildeten Baumaterialschichten aus einem vermittels eines Energiestrahls verfestigbaren Baumaterial additiv aufgebaut.

Bisweilen kann eine Temperierung jeweiliger Baumaterialschichten zweckmäßig, gegebenenfalls sogar erforderlich sein. Die Temperierung dient insbesondere dazu, thermisch induzierte Spannungen innerhalb des jeweiligen Objekt(abschnitt)s zu reduzieren, sodass über eine gezielte Temperierung Einfluss auf die strukturellen Eigenschaften des additiv herzustellenden bzw. hergestellten Objekts genommen werden kann. Entsprechend sind Vorrichtungen der eingangs genannten Art regelmäßig mit Temperiereinrichtungen, welche zur zumindest abschnittsweisen Temperierung einer in einer Bauebene ausgebildeten Baumaterialschicht eingerichtet sind, ausgestattet.

Bekannte Temperiereinrichtungen ermöglichen in der Regel nur eine statische Temperierung jeweiliger Baumaterialschichten. Mit solchen bekannten Temperiereinrichtungen ist es, wenn überhaupt, nur mit verhältnismäßig großem Aufwand möglich, eine, z. B. im Hinblick auf unterschiedliche thermische Eigenschaften unterschiedlicher Baumaterialien, individuell anpassbare Temperierung jeweiliger Baumaterialschichten zu realisieren.

US 2014/0263209 A1 offenbart eine additive Fertigungsvorrichtung mit einer Mehrzahl an Dioden.

Der Erfindung liegt die Aufgabe zugrunde, eine, insbesondere im Hinblick auf die Möglichkeit einer individuell anpassbaren Temperierung jeweiliger Baumaterialschichten, verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes Verfestigen von Baumaterialschichten aus einem vermittels eines Energiestrahls, insbesondere eines Laserstrahls, verfestigbaren Baumaterial eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten eines jeweiligen additiv herzustellenden Objekts beinhalten.

Bei der Vorrichtung kann es sich um eine SLM-Vorrichtung, d. h. um eine Vorrichtung zur Durchführung selektiver Laserschmelzverfahren (SLM-Verfahren), insbesondere LaserCUSINGO-Verfahren, oder um eine SLS-Vorrichtung, d. h. um eine Vorrichtung zur Durchführung selektiver Lasersinterverfahren (SLS-Verfahren), handeln.

Die Vorrichtung umfasst die zur Durchführung additiver Bauvorgänge typischerweise erforderlichen Funktionskomponenten, d. h. insbesondere eine Energiestrahlerzeugungseinrichtung zur Erzeugung eines Energiestrahls, d. h. insbesondere eines Laserstrahls, zur sukzessiven schichtweisen selektiven Belichtung und damit einhergehenden Verfestigung von Baumaterialschichten, und eine Beschichtereinrichtung zur Ausbildung von selektiv zu belichtenden bzw. selektiv zu verfestigenden Baumaterialschichten in einer Bauebene. In der Bauebene erfolgt sonach die eigentliche selektive Belichtung bzw. die eigentliche selektive Verfestigung jeweiliger selektiv zu verfestigender Baumaterialschichten; im Allgemeinen ist in einer Bauebene wenigstens eine selektiv zu verfestigende bzw. selektiv verfestigte Baumaterialschicht ausgebildet. Vermittels der Vorrichtung durchgeführte additive Bauvorgänge erfolgen in einer der Vorrichtung zugehörigen inertisierbaren Prozesskammer. Die Prozesskammer kann einen Teil einer (äußeren) Gehäusestruktur der Vorrichtung, an oder in welcher vorrichtungsseitige Funktionskomponenten angeordnet oder ausgebildet sind, bilden.

Die Vorrichtung umfasst als weitere Funktionskomponente eine Temperiereinrichtung. Die Temperiereinrichtung ist eine zu der Energiestrahlerzeugungseinrichtung gesonderte Funktionskomponente der Vorrichtung. Die Temperiereinrichtung ist zur zumindest bereichsweisen Temperierung einer in einer Bauebene ausgebildeten, insbesondere (noch) selektiv zu verfestigenden oder (bereits) selektiv verfestigten, Baumaterialschicht eingerichtet. Wie sich im Weiteren ergibt, ist die Temperiereinrichtung zu einer lokal begrenzten Temperierung einzelner oder mehrerer zusammenhängender oder nicht zusammenhängender Bereiche einer zu temperierenden Baumaterialschicht eingerichtet. Unter einer Temperierung einer Baumaterialschicht kann ein (kontrolliertes) Aufheizen zumindest eines Bereichs einer Baumaterialschicht auf eine bestimmte Aufheiztemperatur bzw. einen bestimmten Aufheiztemperaturbereich und/oder ein Halten eines aufgeheizten Bereichs auf einer Aufheiztemperatur bzw. einem Aufheiztemperaturbereich sowie ein (kontrolliertes) Abkühlen zumindest eines Bereichs einer Baumaterialschicht auf eine bestimmte Abkühltemperatur bzw. einen bestimmten Abkühltemperaturbereich und/oder ein Halten eines abgekühlten Bereichs auf einer Abkühltemperatur bzw. einem Abkühltemperaturbereich zu verstehen sein.

Die Temperiereinrichtung umfasst wenigstens ein Temperierelement. Das Temperierelement ist zur Erzeugung eines, insbesondere elektromagnetischen, Temperierstrahls eingerichtet. Die vermittels der Temperiereinrichtung realisierbare Temperierung erfolgt sonach vermittels wenigstens eines elektromagnetischen Temperierstrahls und somit durch eine gezielte Einbringung von elektromagnetischer Strahlung - wie sich im Weiteren ergibt Laserstrahlung - in wenigstens einen Bereich einer zu temperierenden, selektiv zu verfestigenden oder selektiv verfestigten Baumaterialschicht.

Das Temperierelement ist als Temperierdiode ausgebildet bzw. umfasst eine solche. Unter einer Temperierdiode ist ein zur Erzeugung eines Temperierstrahls, bei welchem es sich um einen Laserstrahl handelt, eingerichtetes Halbleiterelement zu verstehen. Die optischen Eigenschaften, d. h. z. B. die Wellenlänge, des über eine Temperierdiode erzeugbaren Temperierstrahls sind u. a. von dem oder den eingesetzten Halbleitermaterial(ien) abhängig. Je nach konkreter Ausführung können die Temperierdioden z. B. Wellenlängen zwischen 650 und 2000 nm, insbesondere zwischen 800 und 1000 nm, und Laserleistungen im Bereich zwischen 0,1 und 10 Watt erzeugen; selbstverständlich sind Ausnahmen nach oben und/oder unten denkbar.

Typischerweise handelt es sich bei einer Temperierdiode um eine Oberflächenemitterdiode, kurz Oberflächenemitter, welche eingerichtet ist, einen Laserstrahl senkrecht aus einer Ebene des die eigentliche Temperierdiode bildenden Halbleiterelements abzustrahlen; die Abstrahlfläche eines entsprechenden Halbleiterelements ist im Montagezustand der Temperiereinrichtung typischerweise einer jeweiligen zu temperierenden Baumaterialschicht zugewandt ausgerichtet. Entsprechende Oberflächenemitterdioden werden auch als VCSEL (engl.: vertical cavity surface emitting laser) bezeichnet und zeichnen sich gegenüber anderen Diodenbauformen, d. h. insbesondere gegenüber Kantenemitterdioden, insbesondere durch variierbare Strahleigenschaften, d. h. insbesondere Strahlprofile, Intensitäten, der von diesen erzeugbaren Laserstrahlen aus. Vermittels entsprechenden Oberflächenemitterdioden lassen sich sonach unterschiedliche Temperierstrahlen unterschiedlicher Strahleigenschaften erzeugen. Derart ist eine individuelle bzw. individuell anpassbare, gleichwohl homogene Temperierung von Baumaterialschichten möglich.

Besondere Vorteile der Vorrichtung bestehen darin, dass sich durch die beschriebene Ausgestaltung der Temperiereinrichtung, d. h. insbesondere durch den Einsatz von Temperierdioden, thermische Spannungen in den zu temperierenden Baumaterialschichten und somit in dem oder den additiv herzustellenden bzw. hergestellten Objekten reduzieren lassen, was sich positiv auf die strukturellen Eigenschaften, d. h. z. B. die mechanische Stabilität und die Maßhaltigkeit, der Objekte auswirkt. Ferner lassen sich u.a. die temperaturabhängigen Absorptionseigenschaften des Baumaterials gezielt beeinflussen.

Insgesamt liegt eine, insbesondere im Hinblick auf die Möglichkeit einer individuell anpassbaren Temperierung jeweiliger Baumaterialschichten, verbesserte Vorrichtung vor.

Aus vorstehenden Ausführungen ergibt sich, dass die Temperierdioden typischerweise in wenigstens einem die Strahleigenschaften des über diese erzeugbaren Temperierstrahls betreffenden Temperierstrahlparameter, insbesondere in ihrer Ausgangsleistung, Intensität, Wellenlänge, etc., variierbar sind. Zweckmäßig umfasst die Vorrichtung eine der Temperiereinrichtung zuordenbare oder zugeordnete, hard- und/oder softwaremäßig implementierte Steuereinrichtung. Die Steuereinrichtung ist zur Steuerung des Betriebs, d. h. insbesondere zur Steuerung wenigstens eines die Strahleigenschaften des über eine jeweilige Temperierdiode erzeugbaren Temperierstrahls betreffenden Temperierstrahlparameters, einzelner oder mehrerer Temperierdioden eingerichtet. Vermittels der Steuereinrichtung ist eine individuelle Ansteuerung jeweiliger Temperierdioden und somit eine individuell anpassbare Temperierung jeweiliger zu temperierender Baumaterialschichten möglich. Beispielsweise kann die Geometrie entsprechender Temperierstrahlungsprofile durch eine entsprechende Ansteuerung einzelner oder mehrerer Temperierdioden (nahezu) beliebig angepasst werden. Entsprechende Temperierstrahlungsprofile können z. B. streifenförmig sein, sodass ein lokal begrenzter streifenförmiger Bereich einer zu temperierenden Baumaterialschicht temperierbar ist. Analoges gilt selbstverständlich für andere Temperierstrahlungsprofilgeometrien.

Über eine entsprechende Ansteuerung einzelner oder mehrerer Temperierdioden ist es ferner möglich, (nahezu) beliebige örtlich und/oder zeitlich veränderliche, insbesondere im Hinblick auf eine zu temperierende Baumaterialschicht lokal begrenzte, Temperierstrahlungsprofile, welche sich aus den von jeweiligen Temperierdioden erzeugten Temperierstrahlen zusammensetzen, zu erzeugen. Derart können im Zusammenhang mit einem Aufheizen von zu temperierenden Baumaterialschichten auch beliebige örtlich und/oder zeitlich veränderliche Temperaturrampen auf eine bestimmte Aufheiztemperatur realisiert werden. In analoger Weise können im Zusammenhang mit einem Abkühlen von zu temperierenden Baumaterialschichten auch beliebige örtlich und/oder zeitlich veränderliche Temperaturrampen auf eine bestimmte Abkühltemperatur realisiert werden.

Die Vorrichtung kann eine Erfassungseinrichtung, welche zur Erfassung der Temperatur einer zu temperierenden Baumaterialschicht eingerichtet ist, umfassen. Die Erfassungseinrichtung kann als eine Temperatursensorik, z. B. in Form eines Pyrometers, ausgebildet sein oder eine solche umfassen. Die oder eine weitere vorrichtungsseitige Steuereinrichtung, sofern vorhanden, kann eingerichtet sein, die Steuerung des Betriebs einzelner oder mehrerer Temperierdioden auf Grundlage einer von der Erfassungseinrichtung erzeugten, die erfasste Temperatur einer selektiv zu verfestigenden oder selektiv verfestigten Baumaterialschicht beschreibenden Erfassungsinformation individuell im Hinblick auf eine bestimmte Aufheiz- oder Abkühltemperatur zu steuern. Die Steuerung des Betriebs der Temperierdioden, d. h. im Allgemeinen die Temperierung einer zu temperierenden Baumaterialschicht, kann sonach mit einer Temperaturüberwachung der zu temperierenden Baumaterialschicht einhergehen.

Die Temperiereinrichtung umfasst mehrere Temperierdioden. Die Temperierdioden sind grundsätzlich in beliebigen räumlichen Anordnungen relativ zu einer Bauebene, in welchen jeweilige zu temperierende Baumaterialschichten ausgebildet sind bzw. werden, anordenbar bzw. angeordnet. Eine beispielhafte Anordnung sieht vor, dass die Temperierdioden bzw. mehrere Temperierdioden im Sinne einer Teilmenge einer temperiereinrichtungsbezogen insgesamt vorhandenen Anzahl an Temperierdioden reihen- und/oder spaltenartig in wenigstens einer gemeinsamen, insbesondere parallel zu der Bauebene liegenden, Ebene angeordnet sind. Eine Anordnung von Temperierdioden in zusammenhängenden Reihen und Spalten kann als matrixartige Anordnung, kurz Matrix, bezeichnet werden. Eine entsprechende Matrix umfasst sonach wenigstens eine Reihe, typischerweise mehrere parallel angeordnete Reihen, aus (jeweils) wenigstens zwei Temperierdioden und wenigstens eine Spalte, typischerweise mehrere parallel angeordnete Spalten aus (jeweils) wenigstens zwei Temperierdioden. Eine entsprechende Reihe an Temperierdioden erstreckt sich winklig, insbesondere lotrecht, zu einer entsprechenden Spalte an Temperierdioden und umgekehrt.

Neben der beschriebenen Anordnung entsprechender Temperierdioden in einer gemeinsamen Ebene, können die Temperierdioden bzw. mehrere Temperierdioden im Sinne einer Teilmenge einer temperiereinrichtungsbezogen insgesamt vorhandenen Anzahl an Temperierdioden in mehreren, insbesondere parallel zu der Bauebene liegenden, Ebenen übereinander angeordnet sein. Eine Anordnung von Temperierdioden in mehreren Ebenen übereinander kann eine besonders kompakte, gegebenenfalls ineinander verschachtelte, Anordnung entsprechender Temperierdioden ergeben. Die in jeweiligen übereinander liegenden Ebenen angeordneten Temperierdioden können in einem bestimmten räumlichen Versatz relativ zueinander angeordnet sein. Der von einer in einer oberen Ebene angeordneten Temperierdiode erzeugte Temperierstrahl trifft also nicht auf eine in einer unteren Ebene angeordnete Temperierdiode, sondern tritt durch einen Freiraum, z. B. in Form eines Spalts, einer Bohrung oder einer sonstigen Öffnung, zwischen in einer unteren Ebene unmittelbar benachbart angeordneten Temperierdioden. Die Anordnung der Temperierdioden in mehreren Ebenen übereinander ist jedenfalls so gewählt, dass die Temperierstrahlen auf eine jeweilig zu temperierende Baumaterialschicht gerichtet werden können.

Die Temperierdioden sind - unabhängig von ihrer konkreten Anordnung relativ zu einander - an oder in einer, insbesondere gehäuseartigen, Halteeinrichtung angeordnet. Gemäß Anspruch 1 ist die Halteeinrichtung außerhalb der vorrichtungsseitigen Prozesskammer angeordnet oder ausgebildet. In einer nicht zur Erfindung gehörenden Ausführungsform, kann die Halteeinrichtung in einer Prozesskammerwandung der Prozesskammer angeordnet sein. Eine Anordnung der Temperiereinrichtung außerhalb der vorrichtungsseitigen Prozesskammer setzt eine geeignete Einstrahlmöglichkeit der von den Temperierdioden erzeugbaren bzw. erzeugten Temperierstrahlen voraus, welche z. B. durch ein in einer Prozesskammerwandung angeordnetes oder ausgebildetes, einen Durchtritt jeweiliger Temperierstrahlen in die Prozesskammer ermöglichendes Durchtrittsfenster realisiert sein kann.

Unabhängig von ihrer Anordnung außerhalb oder innerhalb der Prozesskammer umfasst die Halteeinrichtung eine, insbesondere rahmenartige oder -förmige, Haltestruktur, an oder in welcher die Temperierdioden angeordnet sind. Die Haltestruktur umfasst typischerweise eine Anzahl an vorbestimmbaren oder vorbestimmten Anordnungspositionen, an oder in welchen wenigstens eine Temperierdiode anordenbar oder angeordnet ist. Die Anordnung der Temperierdioden an oder in der Haltestruktur kann (beschädigungs- bzw. zerstörungsfrei) lösbar sein, was z. B. einen, etwa im Falle von Service und/oder Reparatur erforderlichen, Austausch vereinfacht.

Die Halteeinrichtung kann in wenigstens einem Bewegungsfreiheitsgrad relativ zu der vorrichtungsseitigen Prozesskammer bzw. der Bauebene bewegbar gelagert sein. Bewegungen der Halteeinrichtung erfolgen über eine mit dieser koppelbare oder gekoppelte, insbesondere (elektro)motorische, Antriebs- und/oder Führungseinrichtung. Über Bewegungen der Halteeinrichtung ist es möglich, die Temperierdioden, z. B. im Hinblick auf eine konkrete Temperiersituation, relativ zu einer zu temperierenden Baumaterialschicht zu bewegen. Bewegungen der Halteeinrichtung können translatorische Bewegungsfreiheitsgrade entlang wenigstens einer Translationsachse und/oder rotatorische Bewegungsfreiheitsgrade um wenigstens eine Rotationsachse beinhalten. Bei Bewegungen der Halteeinrichtung kann es sich z. B. um Linear-, Dreh-, Kipp- oder Schwenkbewegungen handeln. Selbstverständlich sind kombinierte Bewegungen in mehreren unterschiedlichen Bewegungsfreiheitsgraden möglich.

Für eine Anordnung der Halteinrichtung innerhalb der Prozesskammer (und nicht gemäß der Erfindung) gilt insbesondere, dass eine entsprechende Antriebs- und/oder Führungseinrichtung durch eine innerhalb der vorrichtungsseitigen Prozesskammer in wenigstens einem Bewegungsfreiheitsgrad bewegbar gelagert angeordnete vorrichtungsseitige Funktionskomponente bereitgestellt sein kann. Die Halteeinrichtung kann demnach mit einer innerhalb der vorrichtungsseitigen Prozesskammer in wenigstens einem Bewegungsfreiheitsgrad bewegbar gelagert angeordneten vorrichtungsseitigen Funktionskomponente bewegungsgekoppelt sein. Bei der vorrichtungsseitigen Funktionskomponente kann es sich z. B. um die Beschichtereinrichtung, welche zur Ausbildung selektiv zu belichtender bzw. selektiv zu verfestigender Baumaterialschichten in der Bauebene eingerichtet ist, handeln. Die Beschichtereinrichtung ist typischerweise in einem translatorischen Bewegungsfreiheitsgrad relativ zu der Bauebene bewegbar gelagert. Die Halteeinrichtung kann daher mit der Beschichtereinrichtung bewegungsgekoppelt sein, was z. B. derart realisiert sein kann, dass die Halteeinrichtung unmittelbar oder mittelbar, d. h. unter Zwischenschaltung wenigstens eines Bauteils bzw. einer Bauteilgruppe, an der Beschichtereinrichtung angeordnet ist.

Wie erwähnt, kann die Halteeinrichtung eine, insbesondere rahmenartige oder - förmige, Haltestruktur umfassen, an oder in welcher die Temperierdioden angeordnet sind. Bewegungen der Temperierdioden, z. B. im Hinblick auf eine konkrete Temperiersituation, relativ zu einer zu temperierenden Baumaterialschicht können auch derart realisiert sein, dass wenigstens eine Temperierdiode relativ zu der Haltestruktur und somit auch relativ zu einer zu temperierenden Baumaterialschicht in wenigstens einem Bewegungsfreiheitsgrad an oder in der Haltestruktur bewegbar gelagert ist. Seitens der Haltestruktur ist hierfür eine geeignete Antriebs- und/oder Führungseinrichtung, vermittels welcher Bewegungen von Temperdioden realisierbar sind, vorgesehen. Obige Ausführungen im Zusammenhang mit der Bewegung der Halteeinrichtung relativ zu der Bauebene gelten analog für die Bewegung einer Temperierdiode relativ zu der Haltestruktur.

Die Erfindung ist anhand von Ausführungsbeispielen in den Zeichnungsfiguren näher erläutert. Dabei zeigen:
- Fig. 1, 2: je eine Prinzipdarstellung einer Vorrichtung gemäß einem Ausführungsbeispiel; und
- Fig. 3: eine Prinzipdarstellung einer Temperiereinrichtung gemäß einem Ausführungsbeispiel.

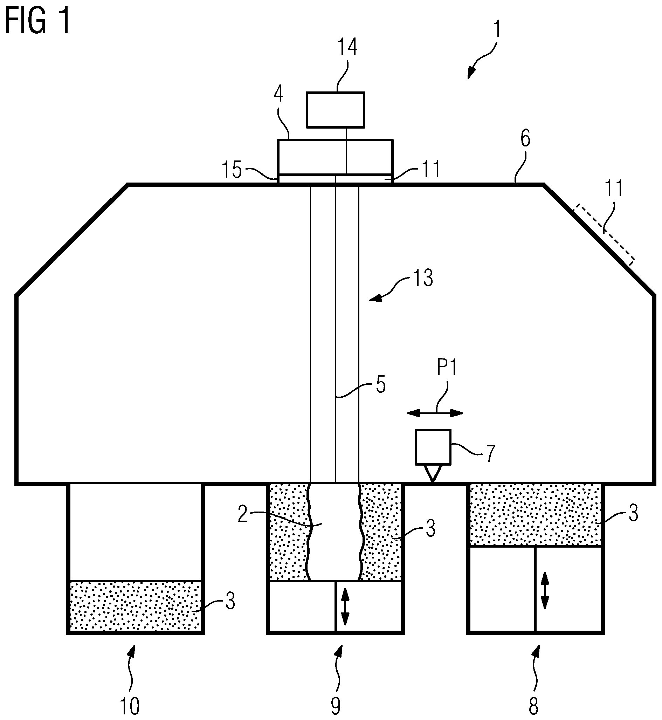

Fig. 1 zeigt eine Prinzipdarstellung einer Vorrichtung 1 gemäß einem Ausführungsbeispiel der Erfindung. Die Vorrichtung 1 dient der additiven Herstellung dreidimensionaler Objekte 2, d. h. insbesondere technischer Bauteile bzw. technischer Bauteilgruppen, durch sukzessive schichtweise selektive Belichtung und damit einhergehende Verfestigung von Baumaterialschichten aus einem verfestigbaren pulverförmigen Baumaterial 3, d. h. z. B. einem Metallpulver, vermittels eines von einer Laserstrahlerzeugungseinrichtung 4 erzeugten Laserstrahls 5. Die selektive Belichtung und die damit einhergehende selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2. Entsprechende Baudaten können beispielsweise "geslicte" CAD-Daten des herzustellenden Objekts 2 beinhalten.

Die Vorrichtung 1 umfasst eine inertisierbare Prozesskammer 6, in welcher die eigentliche additive Herstellung jeweiliger Objekte 2 erfolgt. Die Prozesskammer 6 kann einen Teil einer Gehäusestruktur (nicht gezeigt) der Vorrichtung 1 bilden. In der Prozesskammer 6 ist wenigstens ein Teil der zur Durchführung additiver Bauvorgänge erforderlichen Funktionskomponenten der Vorrichtung 1, d. h. insbesondere eine, wie durch den horizontal ausgerichteten Doppelpfeil P1 angedeutet, bewegbar gelagerte Beschichtereinrichtung 7, welche zur Ausbildung zu verfestigender Baumaterialschichten in einer Bauebene eingerichtet ist, angeordnet bzw. ausgebildet. Ersichtlich sind Funktionsmodule, d. h. konkret ein Pulvermodul 8 zur Bereitstellung von pulverförmigem Baumaterial 3, ein Baumodul 9, in welchem der eigentliche additive Aufbau des Objekts 2 erfolgt, und ein Überlaufmodul 10 zur Aufnahme von nicht verfestigtem Baumaterial 3, an bzw. in der Prozesskammer 6 angeordnet. Die Funktionsmodule können im Sinne von Wechselbehältern lösbar mit der Prozesskammer 6 verbindbar bzw. verbunden sein.

Die Vorrichtung 1 umfasst als weitere Funktionskomponente eine Temperiereinrichtung 11. Die Temperiereinrichtung 11 ist eine zu der Laserstrahlerzeugungseinrichtung 4 gesonderte Funktionskomponente der Vorrichtung 1. Die Temperiereinrichtung 11 ist zur zumindest bereichsweisen Temperierung einer in einer Bauebene ausgebildeten, insbesondere (noch) selektiv zu verfestigenden oder (bereits) selektiv verfestigten, Baumaterialschicht eingerichtet. Unter einer Temperierung einer Baumaterialschicht ist ein (kontrolliertes) Aufheizen zumindest eines Bereichs einer Baumaterialschicht auf eine bestimmte Aufheiztemperatur bzw. einen bestimmten Aufheiztemperaturbereich und/oder ein Halten eines aufgeheizten Bereichs auf einer Aufheiztemperatur bzw. einem Aufheiztemperaturbereich sowie ein (kontrolliertes) Abkühlen zumindest eines Bereichs einer Baumaterialschicht auf eine bestimmte Abkühltemperatur bzw. einen bestimmten Abkühltemperaturbereich und/oder ein Halten eines abgekühlten Bereichs auf einer Abkühltemperatur bzw. einem Abkühltemperaturbereich zu verstehen.

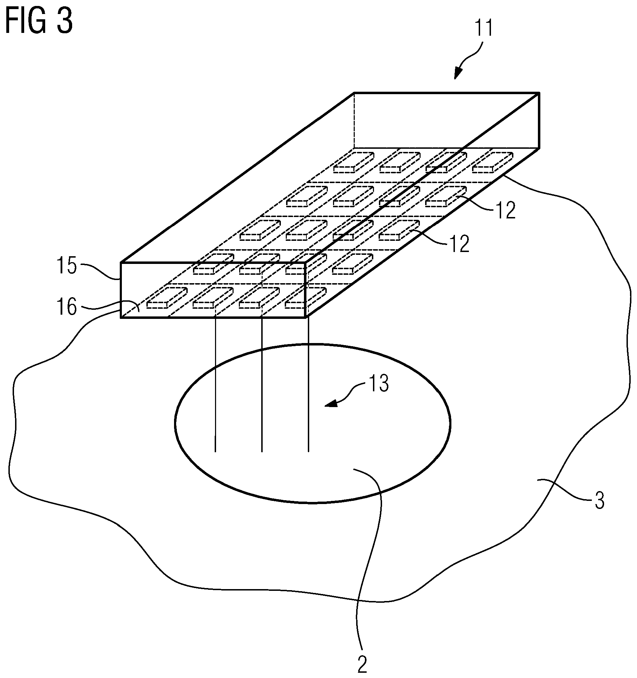

Die Temperiereinrichtung 11 umfasst mehrere Temperierelemente 12 (vgl. Fig. 3). Die Temperierelemente 12 sind jeweils zur Erzeugung eines, insbesondere elektromagnetischen, Temperierstrahls eingerichtet. Die durch die jeweiligen Temperierelemente 12 erzeugten Temperierstrahlen setzten sich zu einem Temperierstrahlungsprofil 13 zusammen. Die vermittels der Temperiereinrichtung 11 realisierbare Temperierung erfolgt sonach vermittels einer elektromagnetischen Temperierstrahlung und somit durch eine gezielte Einbringung von elektromagnetischer Strahlung in wenigstens einen Bereich einer zu temperierenden Baumaterialschicht.

Die Temperierelemente 12 sind jeweils als Temperierdiode, d. h. konkret als Oberflächenemitterdiode, ausgebildet. Unter einer Temperierdiode ist ein zur Erzeugung eines Temperierstrahls, bei welchem es sich um einen Laserstrahl handelt, eingerichtetes Halbleiterelement zu verstehen. Die optischen Eigenschaften, d. h. z. B. die Intensität und die Wellenlänge, des über eine Temperierdiode erzeugbaren Temperierstrahls sind u. a. von dem oder den eingesetzten Halbleitermaterial(ien) abhängig. Je nach konkreter Ausführung können die Temperierdioden z. B. Wellenlängen zwischen 800 und 1000 nm und Laserleistungen im Bereich zwischen 0,1 und 10 Watt erzeugen. Die als Temperierdioden verwendeten Oberflächenemitterdioden zeichnen sich durch variierbare Strahleigenschaften der von diesen erzeugbaren Laserstrahlen aus. Vermittels den Oberflächenemitterdioden lassen sich sonach unterschiedliche Temperierstrahlen unterschiedlicher Strahleigenschaften erzeugen. Derart ist eine individuelle bzw. individuell anpassbare, gleichwohl homogene Temperierung von Baumaterialschichten möglich.

Die Temperierdioden sind sonach typischerweise in wenigstens einem die Strahleigenschaften des über diese erzeugbaren Temperierstrahls betreffenden Temperierstrahlparameter, insbesondere in ihrer Ausgangsleistung, Intensität, Wellenlänge, etc., variierbar. Die Vorrichtung 1 umfasst eine der Temperiereinrichtung 11 zugeordnete hard- und/oder softwaremäßig implementierte Steuereinrichtung 14. Die Steuereinrichtung 14 ist zur Steuerung des Betriebs, d. h. insbesondere zur Steuerung wenigstens eines die Strahleigenschaften des über eine jeweilige Temperierdiode erzeugbaren Temperierstrahls betreffenden Temperierstrahlparameters, einzelner oder mehrerer Temperierdioden eingerichtet. Vermittels der Steuereinrichtung 14 ist eine individuelle Ansteuerung jeweiliger Temperierdioden und somit eine individuell anpassbare Temperierung jeweiliger zu temperierender Baumaterialschichten möglich. Beispielsweise kann die Geometrie entsprechender Temperierstrahlungsprofile 13 durch eine entsprechende Ansteuerung einzelner oder mehrerer Temperierdioden (nahezu) beliebig angepasst werden. Entsprechende Temperierstrahlungsprofile 13 können z. B. streifenförmig sein, sodass ein lokal begrenzter streifenförmiger Bereich einer zu temperierenden Baumaterialschicht temperierbar ist. Analoges gilt selbstverständlich für andere Temperierstrahlungsprofilgeometrien.

Über eine entsprechende Ansteuerung einzelner oder mehrerer Temperierdioden ist es ferner möglich, (nahezu) beliebige örtlich und/oder zeitlich veränderliche Temperierstrahlungsprofile zu erzeugen. Derart können im Zusammenhang mit einem Aufheizen von zu temperierenden Baumaterialschichten auch beliebige örtlich und/oder zeitlich veränderliche Temperaturrampen auf eine bestimmte Aufheiztemperatur realisiert werden. In analoger Weise können im Zusammenhang mit einem Abkühlen von zu temperierenden Baumaterialschichten auch beliebige örtlich und/oder zeitlich veränderliche Temperaturrampen auf eine bestimmte Abkühltemperatur realisiert werden.

Die Vorrichtung 1 kann eine Erfassungseinrichtung (nicht gezeigt, weil optional), welche zur Erfassung der Temperatur einer zu temperierenden Baumaterialschicht eingerichtet ist, umfassen. Die Erfassungseinrichtung kann als eine Temperatursensorik, z. B. in Form eines Pyrometers, ausgebildet sein. Die Steuereinrichtung 14 kann eingerichtet sein, die Steuerung des Betriebs einzelner oder mehrerer Temperierdioden auf Grundlage einer von der Erfassungseinrichtung erzeugten, die erfasste Temperatur einer selektiv zu verfestigenden oder selektiv verfestigten Baumaterialschicht beschreibenden Erfassungsinformation individuell im Hinblick auf eine bestimmte Aufheiz- oder Abkühltemperatur zu steuern. Die Steuerung des Betriebs der Temperierdioden, d. h. im Allgemeinen die Temperierung einer zu temperierenden Baumaterialschicht, kann sonach mit einer Temperaturüberwachung der zu temperierenden Baumaterialschicht einhergehen.

Anhand von Fig. 3, welche eine Prinzipdarstellung einer Temperiereinrichtung 11 gemäß einem Ausführungsbeispiel, zeigt, ist klar ersichtlich, dass die Temperiereinrichtung 11 mehrere Temperierelemente 12 bzw. mehrere Temperierdioden umfasst. Gemäß dem in Fig. 3 gezeigten Ausführungsbeispiel sind die Temperierdioden reihen- und spaltenartig in einer gemeinsamen, insbesondere parallel zu der Bauebene liegenden, Ebene angeordnet. Diese Anordnung von Temperierdioden kann als matrixartige Anordnung, kurz Matrix, bezeichnet werden.

Neben der in Fig. 3 gezeigten Anordnung entsprechender Temperierdioden in einer gemeinsamen Ebene, können die Temperierdioden auch in mehreren, insbesondere parallel zu der Bauebene liegenden, Ebenen übereinander angeordnet sein. Die in jeweiligen übereinander liegenden Ebenen angeordneten Temperierdioden können dabei in einem bestimmten räumlichen Versatz relativ zueinander angeordnet sein. Der von einer in einer oberen Ebene angeordneten Temperierdiode erzeugte Temperierstrahl trifft also nicht auf eine in einer unteren Ebene angeordnete Temperierdiode, sondern tritt durch einen Freiraum, z. B. in Form eines Spalts, einer Bohrung oder einer sonstigen Öffnung, zwischen in einer unteren Ebene unmittelbar benachbart angeordneten Temperierdioden.

Anhand von Fig. 3 ist ferner ersichtlich, dass die Temperierdioden an bzw. in einer gehäuseartigen Halteeinrichtung 15 angeordnet sind. Die Halteeinrichtung 15 umfasst eine rahmenartige bzw. -förmige Haltestruktur 16, an bzw. in welcher die Temperierdioden angeordnet sind. Die Haltestruktur 16 umfasst eine Anzahl an vorbestimmbaren oder vorbestimmten Anordnungspositionen (nicht näher bezeichnet), an bzw. in welchen wenigstens eine Temperierdiode anordenbar bzw. angeordnet ist. Die Anordnung der Temperierdioden an bzw. in der Haltestruktur 16 kann (beschädigungs- bzw. zerstörungsfrei) lösbar sein. Zurückkommend auf Fig. 1 ist ersichtlich, dass die Halteeinrichtung 15 und somit die Temperiereinrichtung 11 außerhalb der Prozesskammer 6 angeordnet bzw. ausgebildet ist. Konkret ist die Halteeinrichtung 15 im Bereich einer einen Deckenbereich der Prozesskammer 6 bildenden Prozesskammerwandung angeordnet bzw. ausgebildet. Strichliert dargestellt ist eine alternative Anordnungsmöglichkeit der oder einer weiteren Halteeinrichtung 15, welche im Bereich einer einen Seitenbereich der Prozesskammer bildenden, beispielhaft schräg verlaufenden Prozesskammerwandung angeordnet bzw. ausgebildet ist. Die genannten Anordnungsmöglichkeiten der Temperiereinrichtung 11 außerhalb der vorrichtungsseitigen Prozesskammer setzt eine geeignete Einstrahlmöglichkeit der von den Temperierdioden erzeugbaren bzw. erzeugten Temperierstrahlen voraus, welche z. B. durch ein in einer Prozesskammerwandung angeordnetes oder ausgebildetes, einen Durchtritt jeweiliger Temperierstrahlen in die Prozesskammer 6 ermöglichendes Durchtrittsfenster realisiert sein kann.

Die Halteeinrichtung 15 könnte auch in einer Prozesskammerwandung der Prozesskammer 6 integriert angeordnet sein (nicht gemäß der Erfindung).

Wenngleich in Fig. 1 nicht gezeigt, ist es möglich, dass die Halteeinrichtung 15 bzw. die Temperiereinrichtung 11 in einem Bewegungsfreiheitsgrad relativ zu der Prozesskammer 6 bzw. der Bauebene bewegbar gelagert ist. Bewegungen der Halteeinrichtung 15 können über eine mit dieser koppelbare oder gekoppelte, insbesondere (elektro)motorische, Antriebs- und/oder Führungseinrichtung erfolgen. Über Bewegungen der Halteeinrichtung 15 ist es möglich, die Temperierdioden, z. B. im Hinblick auf eine konkrete Temperiersituation, relativ zu einer zu temperierenden Baumaterialschicht zu bewegen. Bewegungen der Halteeinrichtung 15 können translatorische Bewegungsfreiheitsgrade entlang wenigstens einer Translationsachse und/oder rotatorische Bewegungsfreiheitsgrade um wenigstens eine Rotationsachse beinhalten. Bei Bewegungen der Halteeinrichtung 15 kann es sich z. B. um Linear-, Dreh-, Kipp- oder Schwenkbewegungen handeln.

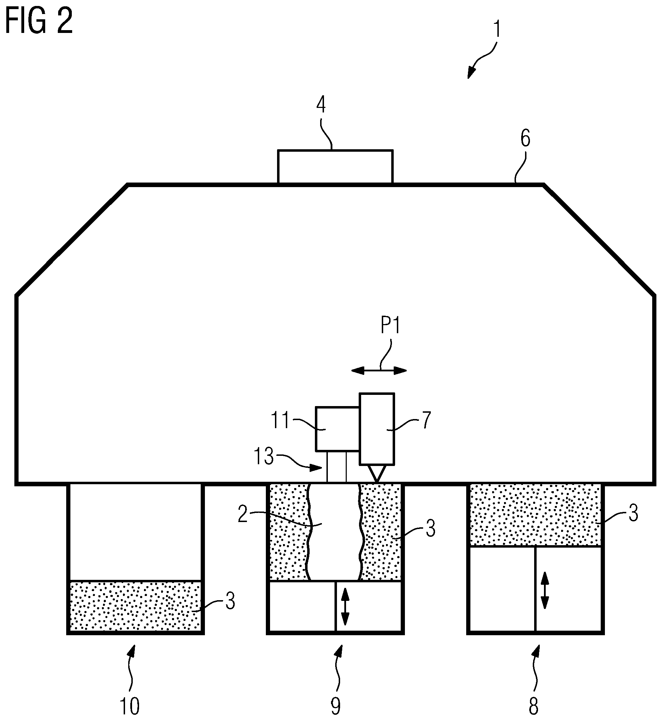

Fig. 2 zeigt eine Prinzipdarstellung einer Vorrichtung 1 gemäß einem weiteren Ausführungsbeispiel (nicht gemäß der Erfindung). Im Unterschied zu dem in Fig. 1 gezeigten Ausführungsbeispiel ist die Halteeinrichtung 15 bzw. die Temperiereinrichtung 11 innerhalb der Prozesskammer 6 angeordnet. Die Halteeinrichtung 15 ist dabei in einem Bewegungsfreiheitsgrad relativ zu der Prozesskammer 6 bzw. der Bauebene bewegbar gelagert. Dies ist derart realisiert, dass die Halteeinrichtung 15 an einer innerhalb der Prozesskammer 6 in wenigstens einem Bewegungsfreiheitsgrad bewegbar gelagerten Funktionskomponente der Vorrichtung 1 angeordnet ist. Bei der Funktionskomponente handelt es sich um die Beschichtereinrichtung 7, welche, wie durch den Pfeil P1 angedeutet, in einem translatorischen Bewegungsfreiheitsgrad relativ zu der Bauebene bewegbar gelagert ist. Selbstverständlich ist eine stationäre Anordnung der Halteeinrichtung 15 bzw. der Temperiereinrichtung 11 innerhalb der Prozesskammer 6 ebenso denkbar.

Für alle Ausführungsbeispiele gilt, dass Bewegungen der Temperierdioden relativ zu einer zu temperierenden Baumaterialschicht alternativ oder ergänzend auch derart realisiert sein können, dass einzelne oder mehrere Temperierdioden relativ zu der Haltestruktur 16 und somit auch relativ zu einer zu temperierenden Baumaterialschicht in wenigstens einem Bewegungsfreiheitsgrad an bzw. in der Haltestruktur 16 bewegbar gelagert sind. Seitens der Haltestruktur 16 wäre hierfür eine geeignete Antriebs- und/oder Führungseinrichtung (nicht gezeigt), vermittels welcher eine Bewegungen von Temperdioden realisierbar ist, vorgesehen.

Mit den in den Fig. 1, 2 gezeigten Vorrichtungen 1 lässt sich ein Verfahren zur additiven Herstellung dreidimensionaler Objekte 2 durch sukzessive schichtweise selektive Belichtung und damit einhergehende Verfestigung von in einer Bauebene ausgebildeten Baumaterialschichten aus einem vermittels eines Energiestrahls 5 verfestigbarem Baumaterial 3 implementieren.

## Patentansprüche

1. Vorrichtung (1) zur additiven Herstellung dreidimensionaler Objekte (2), umfassend:
eine Energiestrahlerzeugungseinrichtung zur sukzessiven schichtweisen selektiven Belichtung und damit einhergehenden Verfestigung von Baumaterialschichten aus einem Baumaterial;
eine Prozesskammer (6), in welcher die sukzessive schichtweise selektive Belichtung und damit einhergehende Verfestigung von Baumaterialschichten durchführbar ist;
eine Temperiereinrichtung, welche zu einer lokal begrenzten Temperierung einzelner oder mehrerer zusammenhängender oder nicht zusammenhängender Bereiche einer zu temperierenden Baumaterialschicht eingerichtet ist, umfassend:
eine eine Haltestruktur umfassende Halteeinrichtung (15), welche außerhalb der Prozesskammer (6) angeordnet oder ausgebildet ist, und
mehrere an oder in der Halteeinrichtung (15) angeordnete Temperierdioden, welche jeweils zur Erzeugung eines Temperierstrahls eingerichtet sind, sodass die mehreren Temperierdioden mehrere entsprechende Temperierstrahlen zur Temperierung jeweiliger Baumaterialschichten erzeugen können.

2. Vorrichtung nach Anspruch 1, **dadurch gekennzeichnet, dass** die Temperierdioden in reihen- und/oder spaltenartiger Anordnung in wenigstens einer Ebene.

3. Vorrichtung nach Anspruch 1 oder 2, **dadurch gekennzeichnet, dass** die Halteeinrichtung (15) eine rahmenartige oder -förmige Haltestruktur (16) umfasst, an oder in welcher die Temperierdioden angeordnet sind.

4. Vorrichtung nach einem der vorhergehenden Ansprüche, **dadurch gekennzeichnet, dass** die Temperierdioden als Oberflächenemitterdioden, VCSEL-Dioden, ausgebildet sind oder solche umfassen.

5. Vorrichtung nach einem der vorhergehenden Ansprüche, **dadurch gekennzeichnet, dass** die Temperierdioden typischerweise in wenigstens einem die Strahleigenschaften des über diese erzeugbaren Temperierstrahls betreffenden Temperierstrahlparameter, insbesondere in ihrer Ausgangsleistung, Intensität, Wellenlänge, etc., variierbar sind.

6. Vorrichtung nach einem der vorhergehenden Ansprüche, **gekennzeichnet durch** eine Steuereinrichtung, welche eine individuelle Ansteuerung jeweiliger Temperierdioden und somit eine individuell anpassbare Temperierung jeweiliger zu temperierender Baumaterialschichten ermöglicht.

7. Vorrichtung nach Anspruch 6, **dadurch gekennzeichnet, dass** das Strahlprofil und/oder die Ausgangsleistung und/oder die Intensität und/oder die Wellenlänge als entsprechende Strahleigenschaften variierbar sind.

8. Vorrichtung nach Anspruch 6, **dadurch gekennzeichnet, dass** die Steuereinrichtung (14) eingerichtet ist, einzelne oder mehrere Temperierdioden anzusteuern, wodurch örtlich und/oder zeitlich veränderliche, insbesondere im Hinblick auf eine zu temperierende Baumaterialschicht lokal begrenzte, Temperierstrahlungsprofile, welche sich aus den von jeweiligen Temperierdioden erzeugten Temperierstrahlen zusammensetzen, erzeugbar sind.

9. Vorrichtung nach Anspruch 8, **gekennzeichnet durch** eine Erfassungseinrichtung zur Erfassung der Temperatur einer zu temperierenden Baumaterialschicht eingerichtet ist, wobei die oder eine weitere vorrichtungsseitige Steuereinrichtung eingerichtet ist, die Steuerung des Betriebs einzelner oder mehrerer Temperierdioden auf Grundlage einer von der Erfassungseinrichtung erzeugten, die erfasste Temperatur einer selektiv zu verfestigenden oder selektiv verfestigten Baumaterialschicht beschreibenden Erfassungsinformation individuell im Hinblick auf eine bestimmte Aufheiz- oder Abkühltemperatur zu steuern.

10. Vorrichtung nach Anspruch 9, **dadurch gekennzeichnet, dass** die Erfassungseinrichtung als eine Temperatursensorik in Form eines Pyrometers ausgebildet ist oder ein solches umfasst.

11. Vorrichtung nach einem der vorhergehenden Ansprüche, **dadurch gekennzeichnet, dass** die Anordnung der Temperierdioden an oder in der Halteeinrichtung (15) lösbar ist.

## Claims

1. Device (1) for additive manufacturing of three-dimensional objects (2), comprising:
an energy beam generating device for successive layer-by-layer selective exposure and associated solidification of building material layers from a building material;
a process chamber (6) in which the successive layer-by-layer selective exposure and the associated solidification of building material layers can be carried out;
A temperature control device which is provided for a locally limited temperature control of one or more contiguous or non-contiguous areas of a building material layer to be tempered, comprising:
a holding device (15) comprising a holding structure which is arranged or formed outside the process chamber (6), and
a plurality of tempering diodes arranged on or in the holding device (15), each of which is designed to produce a tempering beam, so that the plurality of tempering diodes can produce a plurality of corresponding tempering beams for the tempering of respective building material layers.

2. Device according to claim 1, **characterized in that the tempering diodes in series and / or column-like arrangement in at least one plane.**

3. Device according to claim 1 or 2, **characterized in that** the holding device (15) comprises a frame-like or -shaped holding structure (16), on or in which the tempering diodesarearranged.

4. Device according to one of the preceding **claims,characterized in that** the tempering diodes are formed as surface emitter diodes, VCSEL diodes, or comprise such.

5. Device according to one of the preceding claims, **characterized in that** the tempering diodes are typically variable in at least one of the beam properties of the tempering beam parameter, in particular in its output power, intensity, wavelength, etc., which can be generated via this tempering beam.

6. Device according to one of the preceding claims, **characterized by** a control device, which allows an individual control of respective tempering diodes and thus an individually adjustable tempering of respective building material layers to be tempered.

7. Device according to claim 6,**characterized in that** the beam profile and / or the output power and / or the intensity and / or the wavelength are variable as corresponding beam properties.

8. Device according to claim 6, **characterized in that** the control device (14) is equipped to drive single or more temperature control diodes, whereby locally and / or temporally variable, in particular with regard to a to be tempered building material layer locally limited, temperature control radiation profiles,which are composed of the temperature control beams produced by the respective temperature control diodes, can be generated.

9. Device according to claim 8, **characterized by** a detection device for detecting the temperature of a building material layer to be tempered, wherein the or another device-side control device is arranged to control the operation of single or more temperature control diodes on the basis of a generated by the detection device, the detected temperature of a selectively solidified or selectively solidified building material layer descriptive detection information individually with regard to a certain heating or cooling temperature.

10. Device according to claim 9, **characterized in that** the detection device is formed as a temperature sensor in the form of a pyrometer or comprises one.

11. Device according to one of the preceding claims, **characterized in that** the arrangement of the tempering diodes on or in the holding device (15) is detachable.

## Revendications

1. Dispositif (1) pour la fabrication additive d'objets tridimensionnels (2), comprenant:
un dispositif de génération de faisceaux d'énergie pour l'exposition sélective par couches successives et la solidification concomitante de couches de matériaux de construction à partir d'un matériau de construction;
une chambre de procédé (6) dans laquelle l'exposition sélective par couches successives et la solidification concomitante des couches de matériaux de construction sont réalisables;
un dispositif de thermorégulation conçu pour thermoréguler localement une ou plusieurs parties contiguës ou non contiguës d'une couche de matériau de construction à thermoréguler, comprenant:
un dispositif de retenue (15) comprenant une structure de retenue, placé ou formé à l'extérieur de la chambre de procédé (6), et
plusieurs diodes de thermorégulation disposées sur ou dans le dispositif de retenue (15), chacune étant conçue pour produire un jet de thermorégulation, de sorte que les plusieurs diodes de thermorégulation puissent produire plusieurs jets de thermorégulation correspondants pour la thermorégulation des couches respectives de matériaux de construction.

2. Dispositif selon la revendication 1, **caractérisé en ce que** les diodes de thermorégulation sont disposées en rangées et/ou en colonnes dans au moins un plan.

3. Dispositif selon la revendication 1 ou 2, **caractérisé en ce que** le dispositif de retenue (15) comprend une structure de maintien en forme de cadre ou en forme de cadre (16) sur ou dans laquelle les diodes de thermorégulationsontdisposées.

4. Dispositif selon l'une quelconque des revendications précédentes, **caractérisé en ce que** les diodes de thermorégulation sont formées en tant que diodes émettrices de surface, diodes VCSEL, ou comprennent de telles diodes.

5. Dispositif selon l'une quelconque des revendications précédentes, **caractérisé en ce que** les diodes de thermorégulation sont typiquement variables dans au moins un des paramètres du faisceau de thermorégulation relatifs aux caractéristiques du faisceau de thermorégulation généré par ce faisceau de thermorégulation, notamment en ce qui concerne leur puissance de sortie, leur intensité, leur longueur d'onde, etc.

6. Dispositif selon l'une quelconque des revendications précédentes, **caractérisé par** un dispositif de commande qui permet une commande individuelle des diodes de thermorégulation respectives et donc une thermorégulation adaptable individuellement des couches respectives de matériaux de construction à tempérer.

7. Dispositif selon la revendication 6, **caractérisé en ce que** le profil de faisceau et/ou la puissance de sortie et/ou l'intensité et/ou la longueur d'onde sont variables en tant que propriétés de faisceau correspondantes.

8. Dispositif selon la revendication 6, **caractérisé** en ce quel'appareil de commande (14) est équipé pour commander une ou plusieurs diodes de thermorégulation, ce qui permet deproduire des profils de rayonnement de thermorégulation localement et/ou temporellement variables, en particulier en cequi concerne une couche de matériau de construction à tempérer, limités localement, composés des rayons de thermorégulation produits par les diodes de thermorégulation respectives.

9. Dispositif selon la revendication 8, **caractérisé en ce qu'**ilest équipé d'un dispositif de détection de la température d'une couche de matériau de construction à tempérer, dans lequel le ou un autre dispositif de commande côté dispositif est mis en place pour contrôler individuellement le fonctionnement d'une ou de plusieurs diodes de thermorégulation sur la base d'une information de détection générée par le dispositif de détection, décrivant la température détectée d'une couche de matériau de construction à solidifier ou à solidifier sélectivement, en vue d'une température de chauffage ou de refroidissement déterminée.

10. Dispositif selon la revendication 9, **caractérisé en ce que** le dispositif de détection est formé ou comprend un capteur de température sous la forme d'un pyromètre.

11. Dispositif selon l'une quelconque des revendications précédentes, **caractérisé en ce que** la disposition des diodes de thermorégulation sur ou dans le dispositif de retenue (15) est soluble.
